# EUROPEAN PATENT SPECIFICATION

(11) **EP 2 843 633 B1**
(45) Date of publication and mention of the grant of the patent: **24.08.2016**
(21) Application number: 14182850.9
(22) Date of filing: 29.08.2014
(51) Int. Cl.: G07F 19/00, G06K 13/08

(54) **Safety device for a port of entry of a magnetic card in an automatic machine**
Sicherheitsgerät für einen Magnetkartenschlitz in einem Automaten
Appareil de sécurité pour une fente pour cartes magnétiques dans un distributeur automatique

(30) Priority: 30.08.2013 IT TO20130705
(43) Date of publication of application: 04.03.2015
(73) Proprietor: Corim S.r.l., Caluso (IT)
(72) Inventor: Giaccaglia, Michele, 10014 CALUSO (IT)
(74) Representative: Boggio, Luigi

(56) References cited:
- EP-A1- 0 602 775
- EP-A1- 1 318 487
- EP-A1- 1 798 668
- US-A- 4 037 703

## Description

The present invention relates to a safety device for a port of entry of a magnetic card in an automatic machine.

As known, automatic machines are provided with a port of insertion for a magnetic card, by means of which it is possible to communicate with the automatic machine management system and perform different operations, including the withdrawal of cash. The port of insertion communicates with the outside by way of a projecting shaped entry body generally cantilevered and provided with a card transit slot to and from the port of insertion.

As is also known, theft of money is frequent with withdrawals made using clone cards obtained after having read magnetic card identification codes of unsuspecting users during insertion or extraction of the magnetic cards themselves from the automatic machine. One of the ways used to take possession of the mentioned codes is to fit on the entry body a shaped cap or hood, which carries in its inside, in a position facing the magnetic band of the card, sophisticated electronic reading and remote transmission devices of the detected codes.
Several are, to date, the inhibition devices used to prevent the illicit access to the identification codes and, therefore, the money withdrawal from unsuspecting users, but these devices have proved scarcely efficient and secure as they are unable to prevent the unlawful acquisition of said codes.
Purpose of the present invention is to provide a safety device, which allows to resolve the above mentioned problem in a simple and economic way and, in particular, to define an effective barrier against the attempts of theft of money by way of the automatic machine. Some of the above safety devices are disclosed, for example, in EP 1 318 487 A1, US 4 037 703 A, EP 0 602 775A1 and EP 1 798 668 A1.

According to the present invention, a safety device for a port of entry of a magnetic card in an automatic machine is provided, as claimed in claim 1.

Preferably, in the device defined above, the radial clearance is essentially equal to one dimension of the slot measured orthogonally to an axis of said pin in said direction of insertion/extraction.

Conveniently, the hollow body, cooperates abuttingly with the other of said walls when it is arranged in the approached position thereof.

The invention will now be described with reference to the accompanying drawings, which illustrate an example of a nonlimiting embodiment, wherein:
Figure 1 is a perspective view of a preferred embodiment of the safety device according to the present invention coupled to an automatic machine partially illustrated;
Figures 2 and 3 show, in section, the safety device of Figure 1 in two different operating positions; and
Figure 4 is a figure similar to Figure 3 and shows a variant of a detail of Figure 3.

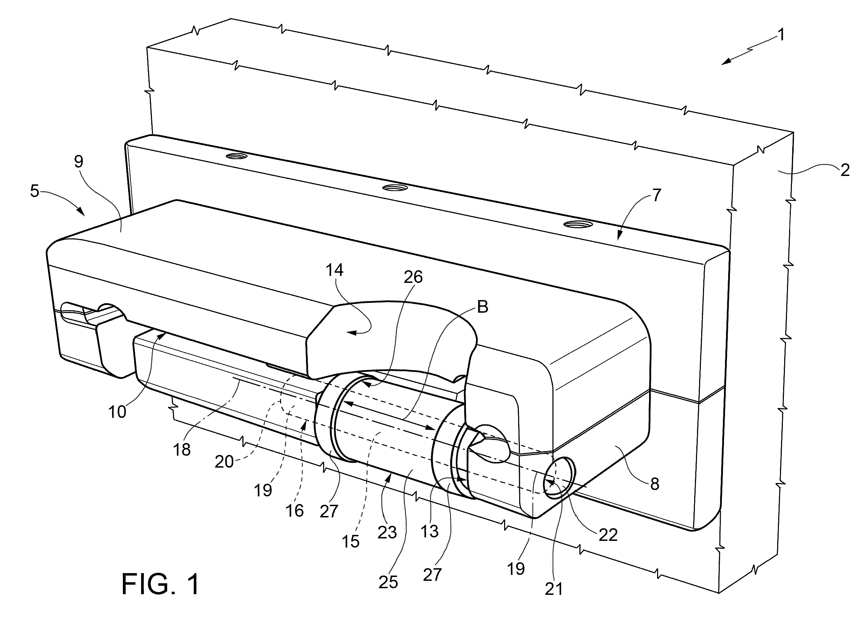

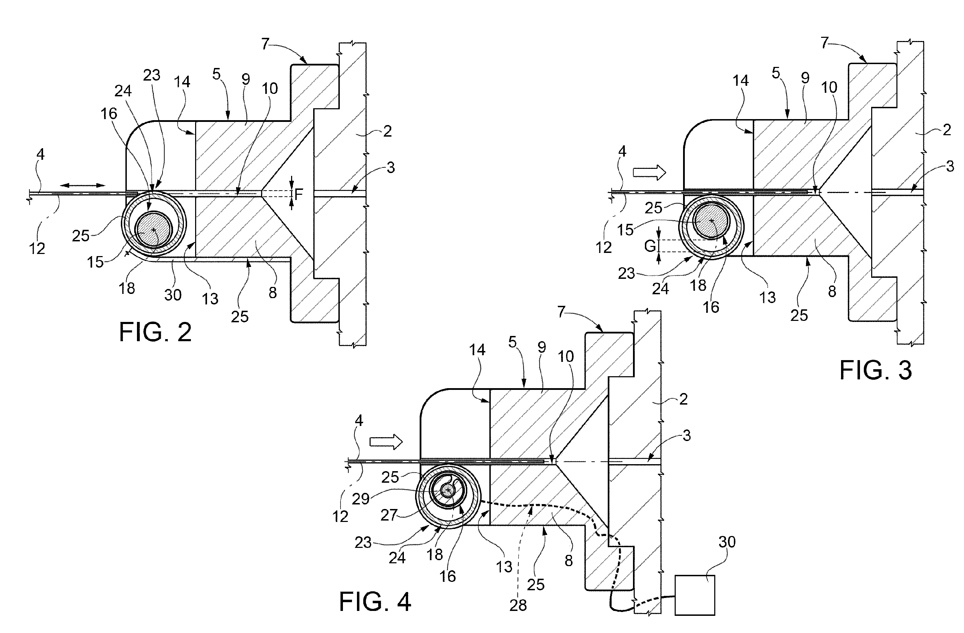

In figure 1, with 1 is indicated, as a whole, an automatic machine, known per se and not described in detail, which comprises a fixed structure 2 and a port of entry 3 for a magnetic card 4, also known per se, and having a magnetic band (figures 2 and 3).

Once again referring to Figure 1, the port of entry 3 is preceded by a safety device 5 to prevent attempts of misappropriation of identification codes or cloning of the magnetic card 4 from the outside of the port of entry 3 and the subsequent theft of cash.

The device 5 comprises an attachment body 7 coupled in a known manner to the fixed structure 2 and, in turn, comprising a bottom wall 8 and a top wall 9 horizontal and facing each other, parallel and transversely spaced apart. The walls 8 and 9 delimit between one another a flattened horizontal transit slot or slit 10 of the magnetic card 4 to and from the port of entry 3 of the automatic machine 1 in a direction 12 of insertion/extraction.

The bottom wall 8 has a passing through recess 13, conveniently rectangular, while the upper wall 9 is provided with a circular passing through recess 14 formed at the recess 13 and with lesser dimensions than the recess 13.

The recess 13 is traversed by an intermediate portion 15 of a solid pin 16 having its own horizontal axis 18 orthogonal to the direction 12 and parallel to the slot 10. The pin 16 has its opposite end portions 19 planted, respectively, in a blind hole 20 and in a through hole 21 formed on opposite sides of the recess 13 and is locked in an axially fixed position by a ball 22 set and fully inserted in the through hole 21 without gripping possibilities from the outside. Alternatively, the opposite end portions 19 of the pin 16 engage the holes 20 and 21 in rotating manner so as to allow the pin 16 to rotate with respect to the frame 7 itself around its axis 18.

Still with reference to Figure 1, the recess 13 houses with clearance a hollow floating body 23 conveniently cylindrical, which surrounds the portion 15 of the pin 16 with radial clearance. Conveniently, the clearance G between the portion 15 and the floating body 23 is equal at least to a vertical dimension F of the slot 10 measured orthogonally to the axis 18 of the pin 16 and to the direction 12 of insertion/extraction. In the particular example described, the clearance G is essentially equal to or greater than the dimension F.

The floating body 23 is, therefore, free to move with respect to the walls 8, 9 and to the pin 16 between a position spaced or lowered, as shown in Figure 3, wherein it is spaced from the wall 9 and arranged outside of the slot 10 so as to allow the insertion of the magnetic card 4 in the slot 10, and an approached or raised position, shown in Figure 2, wherein it partially closes the slot 10 thereby preventing the insertion of the magnetic card 4 in the slot 10 itself.

The floating body 23 has a maximum outer diameter such that, when arranged in its raised position, a lateral surface 24 is arranged, from one side, in abutment against a portion of the plate 9 which delimits the recess 14 and, on the other, is tangent to, or protruding outside of, an outer or bottom surface 25 of the plate 8.

Preferably, the floating body 23 is rotatable with respect to the pin 16; alternatively, the floating body 23 is locked in position angularly and axially fixed with respect to the pin 16 and to the attachment frame 7.

Conveniently, on an intermediate portion 25 of the floating body 23 a relief or circumferential groove 26 is formed, which has a width B measured parallel to the axis 18 equal at least to the width of the magnetic band of the magnetic card 4 measured in the same direction, so as to avoid any contact between the magnetic band and the floating body 3 during the insertion/extraction of the card 4, and therefore the deterioration of the magnetic band itself. In the particular example described, the relief 26 is delimited laterally by two shoulders 27 arranged at the distance B and in abutment against the wall 9 when the floating body 23 is arranged in its approached or raised position.

Alternatively, according to an alternative not shown, the lateral surface 24 of the floating body 23 has a rectilinear generatrix parallel to the axis 18.

According to a further alternative not shown, the floating body 23 is not cylindrical but with a quadrangular or rectangular or faceted base and in this case the floating body 23 is maintained in an angularly fixed position about the pin 16 and the relief is formed at least on part of the surface 24 directed towards the wall 9.

In the alternative illustrated in Figure 4, the pin 16 is a hollow pin and houses a terminal end 27 of an electric wiring 28 protruding outside of the attachment body 7 and electrically connected to a drive and control unit 30 of the automatic machine 1, to inhibit the operation of the automatic machine 1 in the case of break-in attempts that involve the cutting of the pin and the incising of the wiring 28 itself.

Conveniently, the pin 16 is a tubular pin and the end portion 27 of the electric wiring 28 is locked inside the pin 16 by gluing or, preferably, by way of a plug 29 elastically deformable set inside the pin 16 itself.

In use, in the absence of external manipulation, the floating body 23 remains in its spaced apart position by gravity, allowing the insertion and extraction of the magnetic card 4 in the traditional way and, therefore, the execution of the operation provided by an automatic machine 1.

In the moment when a thief tries to steal the code of the magnetic card 4, for example by fitting on the attachment body 7 a cap or hood 30 (fig. 2) with an identification code reading device of the magnetic card 4 on board, as illustrated in figure 2, the cap 30 itself inevitably moves the floating body 23 in its close or raised position thus closing the slot 10 and preventing the insertion of the card 4.

If the thief attempt to remove the floating body 23, for example by cutting the pin 16 or the floating body 23 itself, the use of a rotary pin and/or of a rotating floating body definitely complicates the cutting operations, already in themselves complex due to the small space between the floating body 23 and the plate 8.

The removal of the floating body 23 is, however, unnecessary in the case where the wiring 28 is provided. In fact, during the cutting of the pin 16 the wiring 28 is inevitably also cut to which follows an immediate shutdown of the automatic machine 1 and/or an alarm signal emitted to a security company.

In the device described 5, finally, it is even impossible to axially extract the pin 16, since the insertion hole 21 of the pin 16 itself is stably closed by the ball 22 that once set cannot be removed.

From the foregoing it appears evident that to the device 5 described variations or changes may be made without departing from the protective scope defined by the independent claim.

In particular, the floating body 23 could comprise shapes and/or dimensions different from those indicated by way of example, but always such as to partially and/or completely close the slot 4 when an external action would move it from its spaced resting condition.

Also, the walls 8 and 9 could have recesses different from those described both by shape, and by size or if arranged in areas other than those indicated.

Finally, the walls 8 and 9 and consequently the slot 10 may not be horizontal but, for example, vertical.

## Claims

1. A safety device (5) for a port (3) of entry of a magnetic card (4) in an automatic machine (1), the device (5) comprising an attachment frame (7) to a fixed structure (2) of the automatic machine (8); the attachment frame (7) comprising a pair of walls (8) (9) facing each other and spaced apart to delimit a flat transit slot (10) for the transit of the magnetic card (4) from and to the port of entry of the automatic machine in a direction (12) of insertion/extraction; at least one (8) of said walls having a recess (13); the device further comprising a horizontal pin (16) coupled to said attachment frame and a hollow body (23), **characterized in that** said pin (16) crosses said recess (13) in a direction orthogonal to said direction (12) of insertion/extraction and **in that** said hollow body (23) surrounds said pin (16) with radial clearance and is floating with respect to said other wall between a distanced position, in which it remains by gravity, allowing the insertion and extraction of the magnetic card in said slot, and an approached position, in which it partially closes said slot (10) preventing the insertion of the magnetic card (4) in the slot (10).

2. The device according to claim 1, **characterized in that** said radial clearance is essentially equal to one dimension of said slot (10) measured orthogonally to an axis of said pin (16) in said direction of insertion/extraction (12).

3. The device according to claim 1 or 2, **characterized in that** said hollow body (23), cooperates abuttingly with the other of said walls when it is arranged in the approached position thereof.

4. The device according to any one of the preceding claims, **characterized in that** said hollow body (23) is a tubular body rotational about said pin (16).

5. The device according to claim 3, **characterized in that** said hollow body is a cylindrical body.

6. The device according to any one of the preceding claims, **characterized in that** said hollow body (23) comprises an intermediate side relief (26) having width measured parallel to an axis of said pin equal at least to the width of a magnetic band of said magnetic card (4) measured in the same direction.

7. The device according to any one of the preceding claims, **characterized in that** said pin (16) is coupled to said frame in rotatable manner about its axis.

8. The device according to any one of the preceding claims, **characterized in that** said pin (16) accommodates a terminal end (27) of an electric wiring (28).

9. The device according to claim 8, **characterized in that** said pin is a tubular pin and **in that** said terminal end (27) of the electric wiring (28) is locked inside said pin by means (29) of an elastically deformable pin.

10. The device according to any one of the preceding claims, **characterized in that** both said walls (8) (9) comprise respective recesses; one of said recesses being delimited by a portion of the respective said wall defining a rest for said hollow body when it is arranged in said approached position.

## Patentansprüche

1. Sicherheitsvorrichtung (5) für eine Schnittstelle (3) für den Eintritt einer Magnetkarte (4) in einem Automaten (1), wobei die Vorrichtung (5) einen Befestigungsrahmen (7) an einer festen Struktur (2) des Automaten (8) aufweist; wobei der Befestigungsrahmen (7) ein Paar von einander gegenüberliegenden Wänden (8) (9), die voneinander beabstandet sind, aufweist, um einen flachen Durchgangsschlitz (10) für den Durchgang der Magnetkarte (4) von und zu dem Eintrittsschlitz des Automaten in einer Einführungs-/Entnahmerichtung (12) zu begrenzen; wobei die Vorrichtung ferner einen horizontalen Stift (16) aufweist, der mit dem Befestigungsrahmen gekoppelt ist, und einen hohlen Körper (23), **dadurch gekennzeichnet, dass** der Stift (16) die Vertiefung (13) in einer Richtung orthogonal zu der Einführungs-/Entnahmerichtung (12) durchquert und dass der hohle Körper (23) den Stift (16) mit einem radialen Spielraum umgibt und in Bezug auf die andere Wand zwischen einer beabstandeten Position, in der er durch die Schwerkraft verbleibt, die das Einführen und Entnehmen der Magnetkarte in den Schlitz zulässt, und einer angenäherten Position, in der er den Schlitz (10) teilweise schließt, wobei das Einführen der Magnetkarte (4) in den Schlitz (10) verhindert wird, beweglich ist.

2. Vorrichtung nach Anspruch 1, **dadurch gekennzeichnet, dass** der radiale Spielraum im Wesentlichen gleich einer Abmessung des Schlitzes (10) ist, die orthogonal zu einer Achse des Stifts (16) in der Einführungs-/Entnahmerichtung (12) gemessen wird.

3. Vorrichtung nach Anspruch 1 oder 2, **dadurch gekennzeichnet, dass** der hohle Körper (23) anliegend mit der anderen der Wände zusammenwirkt, wenn er in seiner angenäherten Position angeordnet ist.

4. Vorrichtung nach einem der vorangehenden Ansprüche, **dadurch gekennzeichnet, dass** der hohle Körper (23) ein rohrförmiger Körper ist, der um den Stift (16) drehbar ist.

5. Vorrichtung nach Anspruch 3, **dadurch gekennzeichnet, dass** der hohle Körper ein zylindrischer Körper ist.

6. Vorrichtung nach einem der vorhergehenden Ansprüche, **dadurch gekennzeichnet, dass** der hohle Körper (23) eine seitliche Zwischenaussparung (26) mit einer parallel zu einer Achse des Stifts gemessenen Breite, die wenigstens gleich der in der gleichen Richtung gemessenen Breite eines Magnetbands der Karte (4) ist, aufweist.

7. Vorrichtung nach einem der vorhergehenden Ansprüche, **dadurch gekennzeichnet, dass** der Stift (16) in einer um seine Achse drehbaren Weise mit dem Rahmen gekoppelt ist.

8. Vorrichtung nach einem der vorhergehenden Ansprüche, **dadurch gekennzeichnet, dass** der Stift (16) ein Anschlussende (27) einer elektrischen Verdrahtung (28) aufnimmt.

9. Vorrichtung nach Anspruch 8, **dadurch gekennzeichnet, dass** der Stift ein rohrförmiger Stift ist, und dass das Anschlussende (27) der elektrischen Verdrahtung (28) mittels (29) eines elastisch verformbaren Stifts im Inneren des Stifts arretiert wird.

10. Vorrichtung nach einem der vorhergehenden Ansprüche, **dadurch gekennzeichnet, dass** beide Seitenwände (8) (9) jeweilige Vertiefungen aufweisen; eine der Vertiefungen durch einen Abschnitt der jeweiligen Wand begrenzt wird, die eine Auflage für den hohlen Körper definiert, wenn er in seiner angenäherten Position angeordnet ist.

## Revendications

1. Dispositif de sécurité (5) destiné à un orifice (3) d'entrée d'une carte magnétique (4) d'un distributeur automatique (1), le dispositif (5) comprenant un cadre de fixation (7) à une structure fixe (2) du distributeur automatique (8); le cadre de fixation (7) comprenant une paire de parois (8) (9) se faisant face et espacées pour délimiter une fente de passage plate (10) destinée au passage de la carte magnétique (4) depuis et vers le port d'entrée du distributeur automatique dans une direction (12) d'insertion/d'extraction ; au moins une (8) desdites parois comportant un évidement (13) ; le dispositif comprenant en outre une tige horizontale (16) accouplée audit cadre de fixation et un corps creux (23), **caractérisé en ce que** ladite tige (16) traverse ledit évidement (13) dans une direction perpendiculaire à ladite direction (12) d'insertion/d'extraction et **en ce que** ledit corps creux (23) entoure ladite tige (16) avec un jeu radial et est flottant par rapport à ladite autre paroi entre une position éloignée, dans laquelle il reste par gravité, en permettant l'insertion et l'extraction de la carte magnétique dans ladite fente, et une position rapprochée, dans laquelle il obture partiellement ladite fente (10) en empêchant l'insertion de la carte magnétique (4) dans la fente (10).

2. Dispositif selon la revendication 1, **caractérisé en ce que** ledit jeu radial est sensiblement égal à une dimension de ladite fente (10), mesurée perpendiculairement à l'axe de ladite tige (16) dans ladite direction d'insertion/d'extraction (12).

3. Dispositif selon la revendication 1 ou 2, **caractérisé en ce que** ledit corps creux (23) coopère en butée avec l'autre desdites parois lorsqu'il est disposé dans sa position rapprochée.

4. Dispositif selon l'une quelconque des revendications précédentes, **caractérisé en ce que** ledit corps creux (23) est un corps tubulaire rotatif sur ladite tige (16).

5. Dispositif selon la revendication 3, **caractérisé en ce que** ledit corps creux est un corps cylindrique.

6. Dispositif selon l'une quelconque des revendications précédentes, **caractérisé en ce que** ledit corps creux (23) comporte un évidement latéral intermédiaire (26) ayant une largeur, mesurée parallèlement à l'axe de ladite tige, au moins égale à la largeur d'une bande magnétique, de ladite carte magnétique (4) mesurée dans la même direction.

7. Dispositif selon l'une quelconque des revendications précédentes, **caractérisé en ce que** ladite tige (16) est accouplée audit cadre de manière à pouvoir tourner sur son axe.

8. Dispositif selon l'une quelconque des revendications précédentes, **caractérisé en ce que** ladite tige (16) reçoit une extrémité terminale (27) d'un câblage électrique (28).

9. Dispositif selon la revendication 8, **caractérisé en ce que** ladite tige est une tige tubulaire, et **en ce que** ladite extrémité terminale (27) du câblage électrique (28) est bloquée à l'intérieur de ladite tige par un moyen (29) d'une tige déformable élastiquement.

10. Dispositif selon l'une quelconque des revendications précédentes, **caractérisé en ce que** lesdites deux parois (8) (9) comportent des évidements respectifs ; un desdits évidements étant délimité par une partie de ladite paroi respective définissant un appui pour ledit corps creux lorsqu'il est disposé dans ladite position rapprochée.
